(19) Europäisches Patentamt / European Patent Office / Office européen des brevets

(11) **EP 3 037 298 B1**

(12) **FASCICULE DE BREVET EUROPEEN**

(45) Date de publication et mention
de la délivrance du brevet:
**28.07.2021 Bulletin 2021/30**

(21) Numéro de dépôt: **15200993.2**

(22) Date de dépôt: **18.12.2015**

(51) Int Cl.:
*B60L 3/12* *(2006.01)*    *B62D 59/04* *(2006.01)*
*B60L 58/13* *(2019.01)*    *B60L 15/20* *(2006.01)*
*B60W 30/18* *(2012.01)*    *B60L 15/32* *(2006.01)*

(54) **PROCEDE ET SYSTEME DE COMMANDE DU COUPLE DEVELOPPE PAR UN MOTEUR ELECTRIQUE D'UN VEHICULE**

VERFAHREN UND SYSTEM ZUR STEUERUNG DES DREHMOMENTS, DER VON EINEM ELEKTRISCHEN MOTOR EINES FAHRZEUGS ERZEUGT WIRD

METHOD AND SYSTEM FOR CONTROLLING THE TORQUE OUTPUT BY AN ELECTRIC MOTOR OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463147**

(43) Date de publication de la demande:
**29.06.2016 Bulletin 2016/26**

(73) Titulaire: **Renault S.A.S.**
**92100 Boulogne-Billancourt (FR)**

(72) Inventeurs:
• **MARSILIA, Marco**
  **92100 BOULOGNE (FR)**
• **CHAZAL, Yann**
  **75015 PARS (FR)**
• **NICOLAS, Pierre**
  **91320 WISSOUS (FR)**

(56) Documents cités:
WO-A1-2012/095615    GB-A- 2 486 474
JP-A- 2003 299 205    US-A1- 2002 163 249

• **None**

**Description**

La présente invention concerne un procédé de commande du couple développé par un moteur électrique d'un premier véhicule tracté par un second véhicule via un organe de traction. L'invention concerne aussi le système de commande mettant en œuvre ce procédé, ainsi qu'un véhicule comprenant un tel système de commande.

Les véhicules électriques sont de plus en plus diffusés, et leur introduction est souvent associée à de nouveaux usages, en cohérence avec les évolutions de société. De tels véhicules électriques comportent un moteur électrique et une batterie électrique reliée au moteur électrique. Le moteur électrique peut fonctionner soit dans un régime « moteur » dans lequel le moteur convertit l'énergie électrique fournie par la batterie en un couple moteur appliqué aux roues du véhicule, soit dans un régime « générateur » ou « alternateur » dans lequel le moteur convertit l'énergie cinétique des roues en énergie électrique qui sera stockée dans la batterie. Ce dernier mode peut par exemple être mis en œuvre pendant une phase de freinage du véhicule ou encore lorsque le véhicule roule sur une pente descendante.

Pour répondre au besoin de tractage d'un véhicule électrique sur de longues distances, des méthodes de l'art antérieur commandent le couple développé par le moteur électrique d'un premier véhicule tracté par un second véhicule, en fonction d'au moins un paramètre mesuré.

L'une des méthodes de commande consiste à mesurer une force longitudinale exercée par l'organe de traction reliant le premier véhicule au second véhicule, à calculer une consigne de couple à développer par le moteur électrique, en fonction de la force longitudinale mesurée, puis à transmettre au moteur électrique la consigne de couple calculée. A titre d'exemple, le document US 2013/0311058 A1 propose de mesurer, de manière directe ou indirecte, la force longitudinale exercée par l'organe de traction, puis de transmettre cette mesure à un contrôleur de bord du premier véhicule, pour opérer une régulation de la force longitudinale via le calcul d'une consigne de couple à développer par le moteur électrique. La mesure indirecte de la force longitudinale peut consister en une mesure préalable de la vitesse longitudinale du premier véhicule. La régulation de la force longitudinale par le contrôleur de bord permet de rendre l'effort exercé par le véhicule tracté sur le véhicule tractant indépendant de l'accélération ou la décélération du véhicule tractant, c'est-à-dire de rendre cet effort sensiblement constant, contrairement au cas d'un véhicule tracté « passif ». Ceci permet de faciliter la conduite du véhicule tractant.

Toutefois, une telle méthode de commande conduit à un pilotage assez peu précis du moteur électrique.

En outre, dans le cadre d'une transition progressive de la propriété à l'usage, des services de partage de véhicules se développent. Des véhicules électriques sont mis à disposition et restituables dans des stations réparties sur le territoire considéré. L'opérateur du service doit cependant rétablir régulièrement la répartition de ses véhicules dans les stations, ce qui se traduit par des coûts dits de « jockeyage ».

Par ailleurs, pour faire face à de nouvelles exigences logistiques, des véhicules électriques sont également susceptibles d'être transformés en remorques de chargement, attelables à un tracteur conventionnel pour l'acheminement routier, ou autonomes en milieu protégé. Cette dernière configuration peut par exemple correspondre au cas d'un opérateur piéton ou cycliste tractant le véhicule dans une zone dite « dernier kilomètre » à accès restreint.

Il devient donc nécessaire de développer des solutions de tractage de véhicules électriques évoluées, permettant notamment la réalisation de ces nouveaux services. Or, les méthodes de commande du couple moteur de l'art antérieur, et en particulier la méthode décrite dans le document US 2013/0311058 A1, ne permettent pas de mettre en œuvre ces solutions de tractage évoluées.

JP 2003 299205 A divulgue un procédé de commande du couple développé par le moteur d'un véhicule électrique en cours de tractage. Toutefois, ce procédé est inadapté aux solutions de tractage évoluées comme le « jockeyage » ou l'accès « dernier kilomètre ».

L'invention décrite par la suite vise à remédier à tout ou partie des inconvénients de l'état de la technique et notamment à proposer un procédé de commande du couple développé par un moteur électrique d'un véhicule tracté permettant d'augmenter la précision du pilotage du moteur électrique, tout en permettant la mise en œuvre de différentes solutions de tractage évoluées, comme le « jockeyage » ou l'accès à la zone « dernier kilomètre ».

L'invention concerne un procédé de commande du couple développé par un moteur électrique d'un premier véhicule, le premier véhicule étant relié à un second véhicule via un organe de traction, le premier véhicule comprenant une batterie électrique reliée au moteur électrique, le second véhicule tractant le premier véhicule, dans lequel le procédé comprend les étapes suivantes :

    **a)** mesure d'une force longitudinale F1 exercée par l'organe de traction sur le premier véhicule ;
    **b)** mesure de la vitesse longitudinale V1 du premier véhicule ;
    **c)** mesure de la puissance électrique instantanée Pe1 fournie par la batterie électrique du premier véhicule ;
    **d)** calcul d'une consigne de couple Tq1c à développer par le moteur électrique, en fonction au moins de la force longitudinale mesurée F1m, de la vitesse longitudinale mesurée V1m et de la puissance électrique mesurée Pe1m ; ledit calcul comprenant le calcul d'une valeur de consigne de force longitudinale F1c à partir de la valeur de la vitesse longitudinale mesurée V1m, de la valeur de puissance électrique mesurée Pe1m et d'une valeur de consigne de puissance électrique instantanée Pelc, puis le calcul de la valeur de consigne de couple Tqlc à partir de la valeur de force longitudinale mesurée Flm et de la valeur de consigne de force longitudinale calculée Flc;

**e)** transmission au moteur électrique de la consigne de couple calculée Tq1c.

Grâce à la mesure de la vitesse longitudinale du premier véhicule et de la puissance électrique fournie par la batterie électrique du premier véhicule, ainsi qu'au calcul de la consigne de couple en fonction au moins de la force longitudinale mesurée, de la vitesse longitudinale mesurée et de la puissance électrique mesuré, la précision du pilotage du moteur électrique est améliorée. En outre, du fait de la prise en compte par le procédé, à chaque instant, de la valeur de la puissance électrique fournie par la batterie électrique du premier véhicule et de la valeur de la vitesse du premier véhicule, le procédé permet la mise en œuvre de la solution de tractage d'un véhicule électrique utilisé comme une remorque de chargement « autonome ».

Ce procédé est simple et ne nécessite pas de moyens spécifiques pour être mis en œuvre, hormis des moyens de mesure d'une force longitudinale exercée par l'organe de traction sur le premier véhicule ainsi qu'une configuration structurelle particulière du contrôleur électronique. En effet, un capteur permettant de mesurer la vitesse d'un véhicule, par exemple par mesure de la vitesse angulaire de ses roues, ainsi qu'un capteur permettant de mesurer le couple développé par un moteur électrique d'un véhicule électrique, et donc d'en déduire la puissance électrique fournie par la batterie via la mesure de vitesse du véhicule, sont déjà disponibles couramment dans les véhicules électriques. En outre, les véhicules électriques comportent de manière classique un contrôleur électronique de bord permettant d'effectuer différents calculs.

Par ailleurs, le procédé selon la présente invention permet le développement d' offres de tractage d'un véhicule électrique de type « gagnant-gagnant », en particulier pour des trajets sur de longues distances encore trop souvent inaccessibles pour un véhicule électrique seul. En effet, le bilan énergétique d'une telle configuration de tractage est favorable car la quantité d'énergie dépensée par les deux véhicules roulant en situation de tractage est inférieure à la somme des quantités d'énergie dépensées par les deux véhicules roulant de manière autonome. Ainsi le propriétaire d'un véhicule tracteur, par exemple un véhicule à moteur thermique, pourrait limiter le coût de son trajet en se faisant rémunérer par l'usager du véhicule électrique tracté, le tarif pouvant être modulé en fonction du niveau de charge souhaité pour la batterie du véhicule tracté à l'arrivée.

Selon un mode de réalisation préféré, la force longitudinale exercée par l'organe de traction sur le premier véhicule est régulée via la consigne de couple calculée Tq1c et une première boucle d'asservissement à une valeur de consigne de force longitudinale F1c, la puissance électrique instantanée fournie par la batterie électrique du premier véhicule est régulée via la consigne de couple calculée Tq1c et une deuxième boucle d'asservissement à une valeur de consigne de puissance électrique instantanée Pe1c, la première boucle d'asservissement étant imbriquée dans la deuxième boucle d'asservissement.

Selon un perfectionnement, le procédé de commande comprend en outre une étape de mesure du niveau de charge électrique Sol de la batterie électrique, et la consigne de couple Tq1c est calculée en outre en fonction du niveau de charge électrique mesuré Solm. Ainsi, outre la solution de tractage d'un véhicule électrique utilisé comme une remorque de chargement « autonome », le procédé de commande permet également la mise en œuvre de la solution de tractage de véhicules électriques pour rétablir leur répartition dans différentes stations dans le cadre d'un service d'auto-partage, ainsi que la solution de tractage d'un véhicule électrique par un véhicule thermique pour effectuer un trajet sur une longue distance.

Selon un mode de réalisation préféré, le niveau de charge électrique de la batterie électrique est régulé via la consigne de couple calculée Tq1c et une troisième boucle d'asservissement à une valeur de consigne de niveau de charge électrique So1c, les première et deuxième boucles d'asservissement étant imbriquées dans la troisième boucle d'asservissement, et l'étape de calcul d'une consigne de couple Tq1c comprend en outre le calcul de la valeur de consigne de puissance électrique instantanée Pe1c à partir de la valeur du niveau de charge électrique mesuré Solm et de la valeur de consigne de niveau de charge électrique So1c. Ainsi, un utilisateur peut avantageusement paramétrer la valeur de consigne de niveau de charge électrique So1c en fonction de l'utilisation et du mode de tractage envisagés. Ceci permet d'adapter le procédé de commande à différentes solutions de tractage évoluées.

L'invention a aussi pour objet un système de commande du couple développé par un moteur électrique d'un premier véhicule, le premier véhicule étant relié à un second véhicule via un organe de traction, le premier véhicule comprenant une batterie électrique reliée au moteur électrique, le système de commande comprenant un contrôleur électronique relié au moteur électrique, des moyens de mesure d'une force longitudinale exercée par l'organe de traction sur le premier véhicule, des moyens de mesure de la vitesse longitudinale du premier véhicule et des moyens de mesure de la puissance électrique instantanée fournie par la batterie électrique du premier véhicule, chacun des moyens de mesure étant relié au contrôleur électronique, dans lequel le contrôleur électronique est propre à calculer une consigne de couple Tq1c à développer par le moteur électrique du premier véhicule, en fonction au moins de la force longitudinale mesurée F1m, de la vitesse longitudinale mesurée V1m et de la puissance électrique mesurée Pelm, le calcul de ladite consigne comprenant le calcul d'une valeur de consigne de force longitudinale Flc à partir de la valeur de la vitesse longitudinale mesurée Vlm, de la valeur de puissance électrique mesurée Pelm et d'une valeur de consigne de puissance électrique instantanée Pelc, puis le calcul de la valeur de consigne de couple Tqlc à partir de la valeur de force longitudinale mesurée Flm et de la valeur de consigne de force longitudinale calculée Flc, et à transmettre la consigne de couple calculée Tq1c au moteur électrique.

Selon un mode de réalisation préféré, le système de commande comprend en outre des moyens de mesure du niveau de charge électrique Solm de la batterie électrique, reliés au contrôleur électronique, et le contrôleur électronique comporte des premier, deuxième et troisième correcteurs, la sortie du premier correcteur étant reliée au moteur électrique, le premier correcteur étant apte à calculer la valeur de consigne de couple Tq1c à partir de la valeur de force longitudinale mesurée F1m et d'une valeur de consigne de force longitudinale F1c ; le deuxième correcteur étant connecté entre la sortie du troisième correcteur et une entrée du premier correcteur, le deuxième correcteur étant apte à calculer la valeur de consigne de force longitudinale F1c à partir de la valeur de la vitesse longitudinale mesurée V1m, de la valeur de puissance électrique mesurée Pe1m et d'une valeur de consigne de puissance électrique instantanée Pe1c, et le troisième correcteur étant apte à calculer la valeur de consigne de puissance électrique instantanée Pe1c à partir de la valeur du niveau de charge électrique mesuré Solm et d'une valeur de consigne de niveau de charge électrique So1c.

De façon préférentielle, le premier correcteur est un régulateur proportionnel - intégral, le deuxième correcteur est un régulateur proportionnel - intégral, et le troisième correcteur est un régulateur proportionnel. Ceci permet d'obtenir un compromis précision/temps de réponse optimal pour la régulation de la force longitudinale exercée par l'organe de traction, de la puissance électrique instantanée fournie par la batterie électrique et du niveau de charge électrique de la batterie électrique.

Avantageusement, le gain du premier correcteur est apte à prendre une première valeur prédéterminée lorsque la valeur de force longitudinale mesurée F1m est de signe négatif, et une seconde valeur prédéterminée lorsque la valeur de force longitudinale mesurée F1m est de signe positif, la première valeur étant supérieure à la seconde valeur. Ceci permet d'accélérer la dynamique de la régulation lorsque la force longitudinale exercée par l'organe de traction sur le premier véhicule présente une valeur négative, c'est-à-dire lorsque le premier véhicule tend à « pousser » le second véhicule.

Avantageusement, le gain du deuxième correcteur est apte à prendre une valeur prédéterminée non nulle lorsque la valeur de la vitesse longitudinale mesurée V1m est supérieure à une valeur seuil prédéterminée V1s, et à prendre une valeur nulle lorsque la valeur de la vitesse longitudinale mesurée V1m est inférieure à la valeur seuil prédéterminée V1s. Ainsi, la régulation de la puissance électrique instantanée fournie par la batterie électrique du premier véhicule est inhibée pour des faibles vitesses du véhicule. En effet, pour de telles vitesses du véhicule, et notamment à l'arrêt de ce dernier, il n'est pas souhaitable de faire évoluer la force longitudinale exercé par l'organe de traction sur le premier véhicule, en fonction de l'écart de puissance électrique.

De façon préférentielle, le premier correcteur présente une première bande passante, le deuxième correcteur présente une deuxième bande passante et le troisième correcteur présente une troisième bande passante, la valeur de la deuxième bande passante étant inférieure à la valeur de la première bande passante, la valeur de la troisième bande passante étant inférieure à la valeur de la deuxième bande passante. Ceci permet d'assurer la stabilité de la régulation de la force longitudinale exercée par l'organe de traction, de la puissance électrique instantanée fournie par la batterie électrique et du niveau de charge électrique de la batterie électrique.

L'invention a également pour objet un véhicule comprenant un moteur électrique et une batterie électrique reliée au moteur électrique, ledit véhicule étant propre à être relié à un autre véhicule via un organe de traction, le véhicule comprenant un système de commande du couple développé par le moteur électrique tel que décrit précédemment, les moyens de mesure d'une force longitudinale exercée par l'organe de traction sur ledit véhicule étant agencés au sein du véhicule.

L'invention sera mieux comprise et d'autres particularités et avantages apparaîtront à la lecture de la description qui va suivre en référence aux dessins où :

- la figure 1 est une vue schématique d'un système de commande du couple développé par un moteur électrique d'un premier véhicule tracté par un second véhicule, le système comprenant un contrôleur électronique ;
- la figure 2 est une vue schématique et fonctionnelle du contrôleur électronique de la figure 1 selon un mode de réalisation préféré, le contrôleur électronique comprenant trois correcteurs et étant apte à mettre en œuvre une étape de calcul du procédé de commande selon l'invention ;
- les figures 3 à 5 sont des vues schématiques respectives de chacun des correcteurs de la figure 2 ;
- la figure 6 est un diagramme temporel montrant l'évolution de la force longitudinale mesurée et de sa consigne, de la puissance électrique instantanée mesurée et de sa consigne, du niveau de charge électrique mesuré et de sa consigne, du couple développé par le moteur électrique et de sa consigne, ainsi que de la pente de la route ;
- les figures 7 et 8 sont des vues rapprochées du diagramme temporel de la figure 6 illustrant certains détails de fonctionnement.

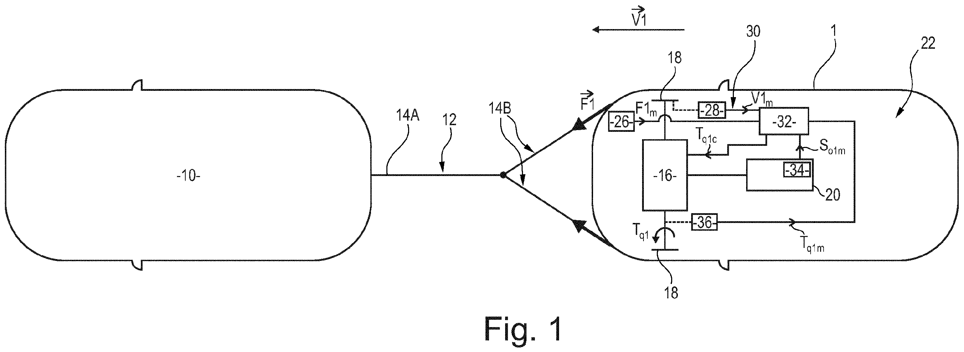

Sur la figure 1 est représenté un premier véhicule 1 relié à un second véhicule 10 via un organe de traction 12. Dans l'exemple de réalisation de la figure 1, le second véhicule 10 comprend un moteur à combustion thermique. En variante non représentée, le second véhicule 10 est un véhicule à propulsion électrique ou tout autre véhicule apte à tracter un autre véhicule.

Dans la suite de la description, la direction longitudinale désigne la direction d'avancement des véhicules 1, 10. L' « avant » et l' « arrière » sont définis classiquement par rapport au sens d'avancement des véhicules 1, 10, selon le sens du vecteur vitesse représentatif de la vitesse longitudinale V1 du premier véhicule 1, comme illustré sur la figure 1.

L'organe de traction 12 est par exemple une attache de remorque, connue en soi. Dans l'exemple de réalisation de la figure 1, l'organe de traction 12 est constitué d'une première partie rectiligne 14A fixée à l'arrière du second véhicule 10, et d'une deuxième partie 14B en forme de « V » fixée à l'avant du premier véhicule 1, et couplée à la première partie rectiligne 14A.

L'organe de traction 12 exerce une force sensiblement longitudinale F1 sur le premier véhicule 1, représentée par un vecteur sur la figure 1.

Le premier véhicule 1 comprend un moteur électrique 16 relié aux roues 18 du véhicule 1 pour permettre leur propulsion, sans présence de moteur à combustion thermique à bord du véhicule. En variante non représentée, le premier véhicule 1 est un véhicule à propulsion hybride, c'est-à-dire un véhicule comprenant, outre le moteur électrique 16, un moteur à combustion thermique couplé au moteur électrique 16. Le moteur électrique 16 développe un couple Tq1.

Le premier véhicule 1 comprend également une batterie électrique 20 reliée au moteur électrique 16. La batterie électrique 20 est une batterie électrique rechargeable.

Sur la figure 1 est également représenté un système 22 de commande du couple développé par le moteur électrique 16 du premier véhicule 1. Dans l'exemple particulier de réalisation de la figure 1, le système de commande 22 est agencé au sein du premier véhicule 1. En variante non représentée, une partie du système de commande 22 est agencée à l'extérieur du premier véhicule 1, l'autre partie du système de commande 22 étant agencée au sein du premier véhicule 1, comme cela sera détaillé par la suite.

Le système de commande 22 comporte des moyens 26 de mesure de la force longitudinale F1 exercée par l'organe de traction 12 sur le premier véhicule 1, des moyens 28 de mesure de la vitesse longitudinale V1 du premier véhicule 1, des moyens 30 de mesure de la puissance électrique instantanée fournie par la batterie électrique 20, et un contrôleur électronique 32. De préférence, comme illustré sur la figure 1, le système de commande 22 comporte également des moyens 34 de mesure du niveau de charge électrique de la batterie électrique 20, reliés au contrôleur électronique 32. Les moyens de mesure du niveau de charge électrique 34 sont aptes à transmettre au contrôleur électronique 32 une donnée Solm de mesure du niveau de charge électrique de la batterie électrique 20. Dans l'exemple de réalisation particulier de la figure 1, les moyens de mesure du niveau de charge électrique 34 sont intégrés dans la batterie électrique 20.

Les moyens 26 de mesure de la force longitudinale F1 sont reliés au contrôleur électronique 32 et sont aptes à transmettre au contrôleur électronique 32 une donnée F1m de mesure de la force longitudinale exercée par l'organe de traction 12 sur le premier véhicule 1. Dans l'exemple particulier de réalisation de la figure 1, les moyens 26 de mesure de la force longitudinale F1 sont agencés dans le premier véhicule 1. Selon cet exemple particulier de réalisation, les moyens de mesure 26 sont formés d'un capteur de force et la mesure de la force longitudinale F1 est une mesure directe. En variante non représentée, la mesure de la force longitudinale F1 est une mesure indirecte, par exemple via une mesure préalable d'une distance, d'une vitesse et/ou d'une accélération relative entre les premier et second véhicules 1, 10. En variante encore, les moyens 26 de mesure de la force longitudinale F1 sont agencés sur la deuxième partie 14B de l'organe de traction 12, à l'extérieur du premier véhicule 1, et sont aptes à effectuer une mesure directe ou indirecte de la force longitudinale F1.

Les moyens 28 de mesure de la vitesse longitudinale V1 sont reliés au contrôleur électronique 32 et sont aptes à transmettre au contrôleur électronique 32 une donnée V1m de mesure de la vitesse longitudinale du premier véhicule 1. Dans l'exemple particulier de réalisation de la figure 1, les moyens 28 de mesure de la vitesse longitudinale V1 sont formés d'un capteur de vitesse angulaire des roues 18 du premier véhicule 1, agencé dans le premier véhicule 1. Le capteur 28 est apte à mesurer la vitesse angulaire des roues 18 et à en déduire la vitesse longitudinale mesurée V1m. Ainsi, selon cet exemple particulier de réalisation, la mesure de la vitesse longitudinale V1 est une mesure indirecte. En variante non représentée, la mesure de la vitesse longitudinale V1 est une mesure directe.

Les moyens 30 de mesure de la puissance électrique instantanée sont reliés au contrôleur électronique 32. Dans l'exemple particulier de réalisation de la figure 1, les moyens 30 de mesure de la puissance électrique instantanée comprennent le capteur 28 de vitesse angulaire des roues, et un capteur 36 de mesure du couple Tq1 développé par le moteur électrique 16, relié au contrôleur électronique 32. Ainsi, selon cet exemple particulier de réalisation, la mesure de la puissance électrique instantanée est une mesure indirecte. Plus précisément, le capteur 36 est apte à transmettre au contrôleur électronique 32 une donnée Tq1m de mesure du couple développé par le moteur électrique 16, et le contrôleur électronique 32 est apte à déterminer, à partir de la donnée de mesure du couple Tq1m et de la donnée V1m de mesure de la vitesse longitudinale du premier véhicule 1 transmise par les moyens de mesure 28, une donnée de mesure de la puissance électrique instantanée fournie par la batterie électrique 20. En variante non représentée, la mesure de la puissance électrique instantanée est effectuée par mesure d'une tension et d'une intensité d'un courant électrique fourni par la batterie électrique 20.

Le contrôleur électronique 32 est relié au moteur électrique 16. Le contrôleur électronique 32 est propre à calculer une consigne de couple Tq1c à développer par le moteur électrique 16, en fonction au moins de la force longitudinale mesurée F1m, de la vitesse longitudinale mesurée V1m et de la puissance électrique mesurée, et à transmettre cette consigne de couple calculée Tq1c au moteur électrique 16.

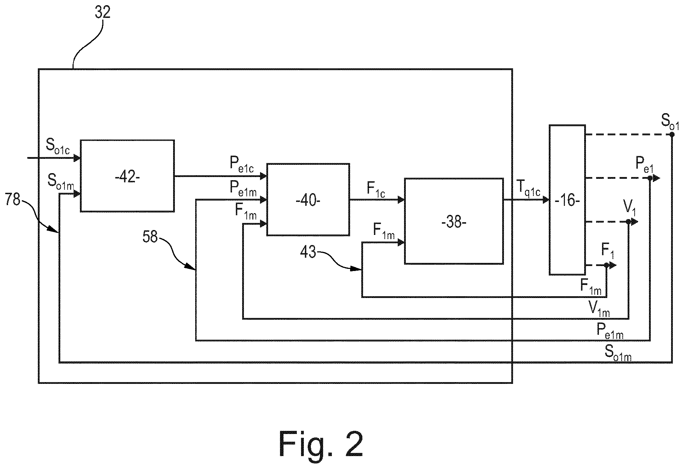

Dans l'exemple de réalisation préférentiel de la figure 1 selon lequel le système de commande 22 comporte des moyens 34 de mesure du niveau de charge électrique de la batterie électrique 20, le contrôleur électronique 32 est propre à calculer la consigne de couple Tq1c à développer par le moteur électrique 16, en fonction en outre du niveau de charge électrique mesuré Solm. Selon cet exemple de réalisation préférentiel, le contrôleur électronique 22 comporte un premier correcteur 38, un deuxième correcteur 40 et un troisième correcteur 42, comme illustré sur la figure 2.

La sortie du premier correcteur 38 est reliée au moteur électrique 16. Le premier correcteur 38 est apte à calculer la valeur de consigne de couple Tq1c à partir de la valeur de force longitudinale mesurée F1m et d'une valeur de consigne de force longitudinale F1c. Ainsi, la force longitudinale F1 exercée par l'organe de traction 12 sur le premier véhicule 1 est régulée via la consigne de couple calculée Tq1c et une première boucle 43 d'asservissement à la valeur de consigne de force longitudinale F1c.

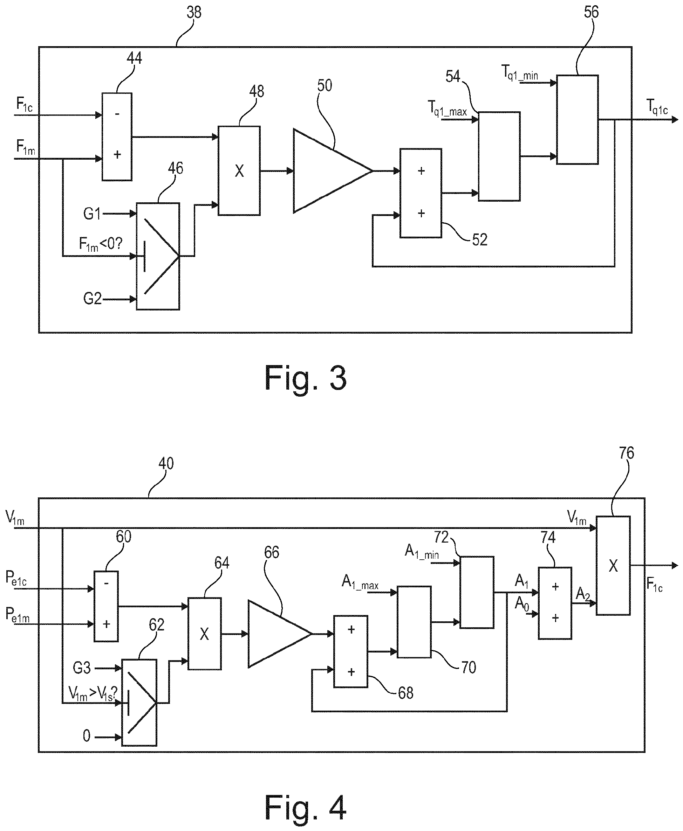

Dans l'exemple de réalisation avantageux illustré sur la figure 3, le premier correcteur 38 est un régulateur proportionnel-intégral. Le premier correcteur 38 comprend un soustracteur 44, un premier comparateur 46, un multiplieur 48, un échantilloneur 50, un sommateur 52, un deuxième comparateur 54 et un troisième comparateur 56.

La sortie du soustracteur 44 est connectée sur une première entrée du multiplieur 48. Le soustracteur 44 reçoit sur son entrée positive la force longitudinale mesurée F1m et sur son entrée négative la consigne de force longitudinale F1c.

La sortie du premier comparateur 46 est connectée sur une deuxième entrée du multiplieur 48. Le premier comparateur 46 reçoit sur une première entrée de sélection un signal présentant une première valeur constante G1, et sur une deuxième entrée de sélection un signal présentant une deuxième valeur constante G2. Les première et deuxième valeurs constantes G1, G2 sont de signe positif. De préférence, la première valeur constante G1 est supérieure à la deuxième valeur constante G2. Le premier comparateur 46 reçoit sur une entrée de comparaison la force longitudinale mesurée F1m et est apte à déterminer le signe de la valeur de force longitudinale mesurée F1m. Si cette valeur est négative, le premier comparateur 46 fournit sur sa sortie le signal présentant la première valeur constante G1. Sinon, le premier comparateur 46 fournit sur sa sortie le signal présentant la deuxième valeur constante G2.

La sortie du multiplieur 48 est connectée en entrée de l'échantilloneur 50.

La sortie de l'échantilloneur 50 est connectée sur une première entrée du sommateur 52.

La deuxième entrée du sommateur 52 est connectée sur la sortie du troisième comparateur 56. La sortie du sommateur 52 est connectée sur une première entrée de comparaison du deuxième comparateur 54.

Le deuxième comparateur 54 reçoit sur une deuxième entrée de comparaison un signal présentant une valeur constante Tq1_max. La valeur constante Tq1_max est positive ou nulle. La sortie du deuxième comparateur 54 est connectée sur une première entrée de comparaison du troisième comparateur 56. Le deuxième comparateur 54 compare les signaux présents sur ses deux entrées de comparaison et fournit sur sa sortie le signal présentant la valeur la plus faible.

Le troisième comparateur 56 reçoit sur une deuxième entrée de comparaison un signal présentant une valeur constante Tq1_min. La valeur constante Tq1_min est négative ou nulle. Le troisième comparateur 56 fournit sur sa sortie la consigne de couple Tq1c à développer par le moteur électrique 16. Plus précisément, le troisième comparateur 56 compare les signaux présents sur ses deux entrées de comparaison et fournit sur sa sortie le signal présentant la valeur la plus haute, ce signal formant alors la consigne de couple Tq1c.

La sortie du premier correcteur 38 tel qu'illustré sur la figure 3 est ainsi saturée par le haut par la valeur constante Tq1_max et par le bas par la valeur constante Tq1_min.

Le gain du premier correcteur 38 est apte à prendre la première valeur constante G1 lorsque la valeur de force longitudinale mesurée F1m est négative, et à prendre la deuxième valeur constante G2 lorsque la valeur de force longitudinale mesurée F1m est positive.

Le deuxième correcteur 40 est connecté entre la sortie du troisième correcteur 42 et une entrée du premier correcteur 38, comme illustré sur la figure 2. Le deuxième correcteur 40 est apte à calculer la valeur de consigne de force longitudinale F1c à partir de la valeur de la vitesse longitudinale mesurée V1m, de la valeur de puissance électrique mesurée Pe1m et d'une valeur de consigne de puissance électrique instantanée Pe1c. Ainsi, la puissance électrique instantanée Pe1 fournie par la batterie électrique 20 est régulée via la consigne de couple calculée Tq1c et une deuxième boucle 58 d'asservissement à la valeur de consigne de puissance électrique instantanée Pe1c. La première boucle d'asservissement 43 est imbriquée dans la deuxième boucle d'asservissement 58.

Dans l'exemple de réalisation avantageux illustré sur la figure 4, le deuxième correcteur 40 est un régulateur proportionnel-intégral. Le deuxième correcteur 40 comprend un soustracteur 60, un premier comparateur 62, un premier multiplieur 64, un échantilloneur 66, un premier sommateur 68, un deuxième comparateur 70, un troisième comparateur 72, un deuxième sommateur 74 et un deuxième multiplieur 76.

La sortie du soustracteur 60 est connectée sur une première entrée du premier multiplieur 64. Le soustracteur 60 reçoit sur son entrée positive la puissance électrique instantanée mesurée Pe1m et sur son entrée négative la consigne de puissance électrique instantanée Pe1c.

La sortie du premier comparateur 62 est connectée sur une deuxième entrée du premier multiplieur 64. Le premier comparateur 62 reçoit sur une première entrée de sélection un signal présentant une valeur constante G3, et sur une deuxième entrée de sélection un signal présentant une valeur nulle. La valeur constante G3 est de signe positif. Le premier comparateur 62 reçoit sur une entrée de comparaison la vitesse longitudinale mesurée V1m et est apte à comparer la valeur de la vitesse longitudinale mesurée V1m à une valeur seuil prédéterminée V1s. Si la valeur de la vitesse longitudinale mesurée V1m est supérieure à la valeur seuil prédéterminée V1s, le premier comparateur 62 fournit sur sa sortie le signal présentant la valeur constante G3. Sinon, le premier comparateur 62 fournit sur sa sortie le signal présentant la valeur nulle.

La sortie du premier multiplieur 64 est connectée en entrée de l'échantilloneur 66.

La sortie de l'échantilloneur 66 est connectée sur une première entrée du premier sommateur 68.

La deuxième entrée du premier sommateur 68 est connectée sur la sortie du troisième comparateur 72. La sortie du premier sommateur 68 est connectée sur une première entrée de comparaison du deuxième comparateur 70.

Le deuxième comparateur 70 reçoit sur une deuxième entrée de comparaison un signal présentant une valeur constante A1_max. La valeur constante A1_max est positive ou nulle. La sortie du deuxième comparateur 70 est connectée sur une première entrée de comparaison du troisième comparateur 72. Le deuxième comparateur 70 compare les signaux présents sur ses deux entrées de comparaison et fournit sur sa sortie le signal présentant la valeur la plus faible.

Le troisième comparateur 72 reçoit sur une deuxième entrée de comparaison un signal présentant une valeur constante A1_min. La valeur constante A1_min est négative ou nulle. La sortie du troisième comparateur 72 est connectée sur une première entrée du deuxième sommateur 74. Le troisième comparateur 72 fournit sur sa sortie un signal A1. Le troisième comparateur 72 compare les signaux présents sur ses deux entrées de comparaison et fournit sur sa sortie le signal présentant la valeur la plus haute, ce signal formant alors le signal A1.

Le deuxième sommateur 74 reçoit sur une deuxième entrée un signal présentant une valeur constante A0. La valeur constante A0 est positive. La sortie du deuxième sommateur 74 est connectée sur une première entrée du deuxième multiplieur 76. Le deuxième sommateur 74 fournit sur sa sortie un signal A2.

Le deuxième multiplieur 76 reçoit sur une deuxième entrée la vitesse longitudinale mesurée V1m et fournit sur sa sortie la consigne de force longitudinale F1c. La consigne de force longitudinale F1c s'exprime ainsi en fonction de la vitesse longitudinale mesurée V1m et du signal A2 comme suit :

$$F1c(t) = A2(t) * V1m(t) \qquad (1)$$

soit :

$$F1c(t) = (A0 + A1(t)) * V1m(t) \;;$$

où le paramètre « t » représente le temps.

Ainsi, la consigne de force longitudinale F1c respectant la formule (1), cette consigne est une fonction linéaire de la vitesse longitudinale du premier véhicule 1. Ceci permet au conducteur du second véhicule 10 d'avoir un ressenti intuitif de l'intensité de l'effort exercé par le premier véhicule tracté 1. En effet, un effort linéairement proportionnel à la vitesse longitudinale du véhicule est comparable aux efforts mécaniques et aérodynamiques résistifs qui s'exercent sur le véhicule, et auxquels le conducteur est confronté en permanence.

Dans une variante non représentée, et produisant le même effet de ressenti intuitif pour le conducteur du second véhicule 10, la consigne de force longitudinale F1c est une fonction du carré de la vitesse longitudinale du premier véhicule 1.

La sortie du deuxième correcteur 40 tel qu'illustré sur la figure 4 est saturée par le haut par la valeur constante A1_max et par le bas par la valeur constante A1_min.

Le gain du deuxième correcteur 40 est apte à prendre la valeur constante G3 lorsque la valeur de la vitesse longitudinale mesurée V1m est supérieure à la valeur seuil prédéterminée V1s, et à prendre une valeur nulle lorsque la valeur de la vitesse longitudinale mesurée V1m est inférieure à la valeur seuil prédéterminée V1s.

La valeur constante G3 est par exemple choisie comme étant sensiblement égale à 0.00001, de sorte à ce que la dynamique de la deuxième boucle d'asservissement 58 soit suffisament lente pour que la « forme » de la consigne de force longitudinale F1c ne soit pas gênante pour le conducteur.

Le troisième correcteur 42 est apte à calculer la valeur de consigne de puissance électrique instantanée Pe1c à partir de la valeur du niveau de charge électrique mesuré Solm et d'une valeur de consigne de niveau de charge électrique So1c. Ainsi, le niveau de charge électrique Sol de la batterie électrique 20 est régulé via la consigne de couple calculée Tq1c et une troisième boucle 78 d'asservissement à la valeur de consigne de niveau de charge électrique So1c, comme illustré sur la figure 2. Les première et deuxième boucles d'asservissement 43, 58 sont imbriquées dans la troisième boucle d'asservissement 78.

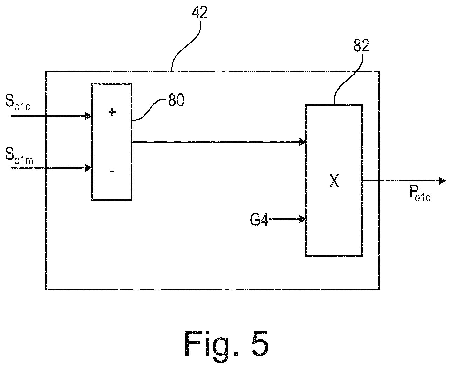

Dans l'exemple de réalisation avantageux illustré sur la figure 5, le troisième correcteur 42 est un régulateur proportionnel. Le troisième correcteur 42 comprend un soustracteur 80 et un multiplieur 82.

La sortie du soustracteur 80 est connectée sur une première entrée du multiplieur 82. Le soustracteur 80 reçoit sur son entrée positive la consigne de niveau de charge électrique So1c et sur son entrée négative le niveau de charge électrique mesuré So1m.

Le multiplieur 82 reçoit sur une deuxième entrée un signal présentant une valeur constante G4. La valeur constante G4 est négative ou nulle. Le multiplieur 82 fournit sur sa sortie la consigne de puissance électrique instantanée Pe1c.

Le gain du troisième correcteur 42 est la valeur constante G4.

Le premier correcteur 38 présente une première bande passante, le deuxième correcteur 40 présente une deuxième bande passante et le troisième correcteur 42 présente une troisième bande passante. Avantageusement, les premier, deuxième et troisième correcteurs 38, 40, 42 sont réglés, via leurs gains respectifs, de sorte à ce que la valeur de la deuxième bande passante soit inférieure à la valeur de la première bande passante, et à ce que la valeur de la troisième bande passante soit inférieure à la valeur de la deuxième bande passante. Ceci permet d'assurer la stabilité des régulations effectuées par les première, deuxième et troisième boucles d'asservissement 43, 58, 78.

Les différents composants de chacun des correcteurs 38, 40, 42 peuvent être implémentés sous forme de modules logiciels (ou « software »), ou sous forme de circuits analogiques (ou « hardware »), ou encore sous la forme d'une combinaison entre des modules logiciels et des circuits analogiques.

Le procédé de commande du couple développé par le moteur électrique 16, selon l'invention, va maintenant être décrit.

On suppose que le second véhicule 10 tracte le premier véhicule 1 via l'organe de traction 12.

Au cours d'une étape initiale, les moyens 26 mesurent la force longitudinale F1 exercée par l'organe de traction 12 sur le premier véhicule 1. A l'issue de cette étape, les moyens de mesure 26 transmettent au contrôleur électronique 32 une donnée F1m de mesure de cette force longitudinale exercée.

Au cours d'une étape suivante ou parallèle, les moyens 28 mesurent la vitesse longitudinale V1 du premier véhicule 1. A l'issue de cette étape, les moyens de mesure 28 transmettent au contrôleur électronique 32 une donnée V1m de mesure de cette vitesse longitudinale.

Au cours d'une étape suivante ou parallèle, les moyens 30 mesurent la puissance électrique instantanée Pe1 fournie par la batterie électrique 20. A l'issue de cette étape, les moyens de mesure 30 transmettent au contrôleur électronique 32 une donnée Pe1m de mesure de cette puissance électrique instantanée.

Au cours d'une étape suivante, le contrôleur électronique 32 calcule une consigne de couple Tq1c à développer par le moteur électrique 16 du premier véhicule, en fonction au moins de la force longitudinale mesurée F1m, de la vitesse longitudinale mesurée V1m et de la puissance électrique mesurée Pe1m. De préférence, l'étape de calcul comprend le calcul d'une valeur de consigne de force longitudinale F1c à partir de la valeur de la vitesse longitudinale mesurée V1m, de la valeur de puissance électrique mesurée Pe1m et d'une valeur de consigne de puissance électrique instantanée Pe1c, puis le calcul de la valeur de consigne de couple Tq1c à partir de la valeur de force longitudinale mesurée F1m et de la valeur de consigne de force longitudinale calculée F1c.

Au cours d'une étape suivante, le contrôleur électronique 32 transmet au moteur électrique 16 la consigne de couple calculée Tq1c. A l'issue de cette étape finale, le moteur électrique applique un couple conforme à la consigne de couple Tq1c et le procédé reboucle à partir de l'étape initiale.

Dans l'exemple de réalisation préférentiel de la figure 1 selon lequel le système de commande 22 comporte des moyens 34 de mesure du niveau de charge électrique de la batterie électrique 20, le procédé comprend en outre une étape au cours de laquelle les moyens 34 mesurent le niveau de charge électrique de la batterie électrique 20, effectuée en parallèle ou à la suite des autres étapes de mesure. A l'issue de cette étape, les moyens de mesure 34 transmettent au contrôleur électronique 32 une donnée Solm de mesure de ce niveau de charge électrique.

Selon ce même exemple de réalisation préférentiel, au cours de l'étape de calcul, le contrôleur électronique 32 calcule la consigne de couple Tq1c à développer par le moteur électrique 16 en fonction en outre du niveau de charge électrique mesuré Solm. De préférence, l'étape de calcul comprend en outre le calcul de la valeur de consigne de puissance électrique instantanée Pe1c à partir de la valeur du niveau de charge électrique mesuré Solm et d'une valeur de consigne de niveau de charge électrique So1c. Ainsi, un utilisateur du premier véhicule 1 peut préalablement régler en début de trajet la consigne de niveau de charge électrique So1c sur une valeur qu'il désire, en fonction du mode de tractage envisagé et/ou de ses préférences quant au niveau de charge de la batterie électrique 20 à l'issue du trajet. Si cette consigne est programmée à une valeur supérieure au niveau de charge électrique initial de la batterie électrique 20 au début du trajet, alors le premier véhicule 1 « récupérera » globalement de l'énergie électrique sur l'ensemble du trajet. Par conséquent, la puissance fournie par le second véhicule 10 contribuera à recharger électriquement la batterie 20 du premier véhicule 1. Si au contraire cette consigne est programmée à une valeur inférieure au niveau de charge électrique initial de la batterie électrique 20 au début du trajet, alors le premier véhicule 1 fonctionnera globalement en « motrice », c'est-à-dire qu'il dépensera globalement de l'énergie électrique sur l'ensemble du trajet. Par conséquent, la consommation d'énergie du second véhicule 10, donc de carburant dans le cas où le second véhicule 10 est muni d'un moteur à combustion thermique, sera inférieure à celle que le second véhicule 10 aurait eu en tractant le premier véhicule 1 en « roues libres ». Ce dernier cas peut par exemple être mis en œuvre dans le cadre d'un mode de tractage sur long trajet, où le propriétaire du second véhicule tractant 10 peut se faire rémunérer par l'usager du premier véhicule tracté 1 selon un tarif par exemple modulé en fonction du niveau de charge souhaité pour la batterie électrique 20 à l'arrivée.

Dans le cas d'un mode de tractage dans le cadre d'un service d'auto-partage, destiné à répartir des véhicules électriques dans différentes stations, un opérateur peut programmer la consigne de niveau de charge électrique So1c sur sa valeur maximale et limiter, via le paramètre Tq1_min, le couple récupératif maximum réalisable par le premier véhicule 1 tracté en fonction de la puissance du second véhicule 10 tractant, ainsi qu'éventuellement du nombre de véhicules tractés en même temps en cascade. Avec ce réglage les véhicules électriques arriveront en station avec le niveau de charge maximum compatible avec la longueur du trajet de transport et avec le niveau de puissance du second véhicule 10.

Dans le cas d'un véhicule électrique 1 utilisé comme une remorque de chargement autonome, c'est-à-dire tracté par un opérateur piéton ou cycliste, un utilisateur du véhicule peut préalablement régler en début de trajet :

- les valeurs constantes A1_min et A1_max comme étant nulles. Ceci permet de rendre l'évolution de la consigne de force longitudinale F1c comme fonction uniquement de la vitesse longitudinale V1 du véhicule, et d'ainsi faciliter le tractage du véhicule par l'opérateur piéton ou cyliste ;
- la valeur constante A0 à une valeur suffisamment faible, par exemple égale à 0.1, pour que l'opérateur piéton ou cyliste puisse tracter le véhicule électrique 1 à une vitesse raisonnable en exerçant un très faible effort.

Dans ce dernier cas, le troisième correcteur 42 est de préférence désactivé, par exemple en réglant le gain G4 du correcteur à une valeur nulle.

On conçoit ainsi que le procédé de commande du couple développé par un moteur électrique d'un véhicule tracté selon l'invention permet d'augmenter la précision du pilotage du moteur électrique, tout en permettant la mise en œuvre de différentes solutions de tractage évoluées.

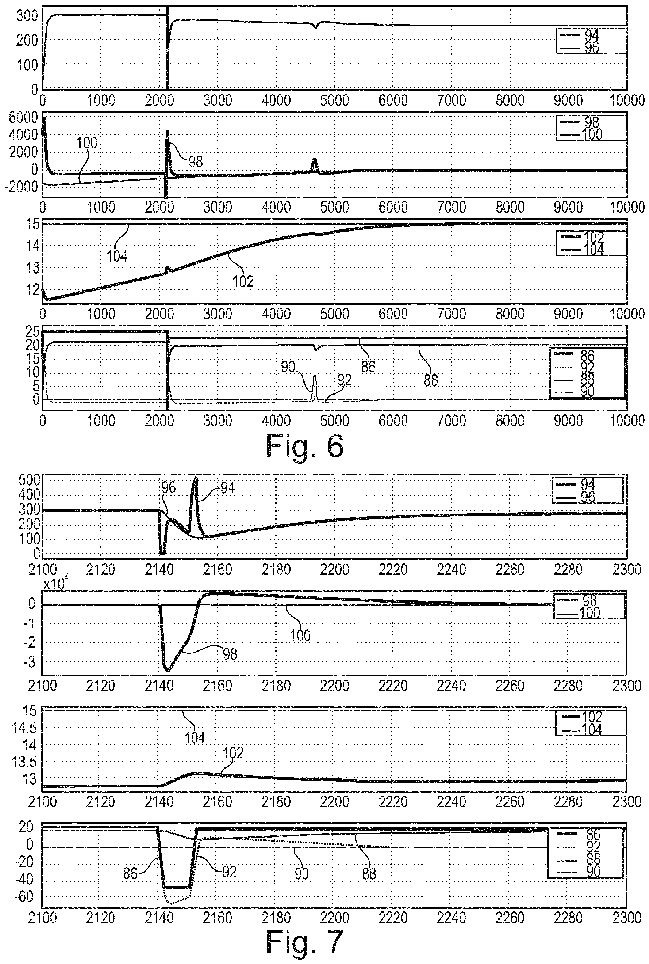

La Figure 6 montre un exemple de résultat obtenu pour les valeurs suivantes des paramètres de réglage :

Tq1_min = -200 ;

Tq1_max = 100 ;

G1= 0.15 ;

G2= 0.07 ;

A0= 10 ;

A1_min= -10 ;

A1_max= 4 ;

V1s = 10 ;

G3 = 0.00001 ; et

G4 = 500.

Dans cet exemple, le niveau de charge électrique initial de la batterie électrique 20 est égal à 12%. La consigne de niveau de charge électrique So1c choisie par l'utilisateur est égale à 15%.

Sur cette figure 6, une première courbe 86 représente l'évolution temporelle du couple développé par le moteur du second véhicule 10, une deuxième courbe 88 représente l'évolution temporelle de la vitesse longitudinale V1, et une troisième courbe 90 représente l'évolution temporelle de la pente de la route.

Sur la figure 6 également, une quatrième courbe 92 représente l'évolution temporelle de la consigne de couple Tq1c, une cinquième courbe 94 représente l'évolution temporelle de la force longitudinale mesurée F1m, une sixième courbe 96 représente l'évolution temporelle de la consigne de force longitudinale F1c, une septième courbe 98 représente l'évolution temporelle de la puissance électrique instantanée mesurée Pe1m, une huitième courbe 100 représente l'évolution temporelle de la consigne de puissance électrique instantanée Pe1c, une neuvième courbe 102 représente l'évolution temporelle du niveau de charge électrique mesuré So1m, et une dixième courbe 104 représente l'évolution temporelle de la consigne de niveau de charge électrique So1c.

Les quatrième, cinquième et sixième courbes 92, 94, 96 de la figure 6 illustrent le fait que la consigne de couple Tq1c est pilotée pour asservir la force F1 exercée par l'organe de traction 12 à sa consigne F1c, via la première boucle d'asservissement 43.

On remarque aussi que la dynamique de la première boucle d'asservissement 43 est plus élevée que celle de la deuxième boucle d'asservissement 58 (cinquième, sixième, septième et huitième courbes 94 à 100), et que la dynamique de la deuxième boucle d'asservissement 58 est plus élevée que celle de la troisième boucle d'asservissement 78 (septième, huitième, neuvième et dixième courbes 94 à 100).

La figure 7 montre un aggrandissement des courbes 86 à 104 illustrées sur la figure 6, correspondant à un freinage du second véhicule 10.

On remarque que le freinage du second véhicule 10 provoque une diminution de la force longitudinale mesurée F1m. Le système de commande 22 réagit à cette diminution en appliquant au moteur électrique 16 du premier véhicule 1 un couple Tq1c de valeur négative. Ainsi, le premier véhicule 1 freine en réaction au freinage du second véhicule 10. Ceci permet de réduire avantageusement la distance de freinage, contrairement au cas d'un véhicule tracté « passif » où la distance de freinage est plus grande du fait de l'inertie du véhicule tracté.

Par ailleurs, les deuxième et sixième courbes 88, 96 sur la figure 7 illustrent le fait que la consigne de force longitudinale F1c décroit lorsque la vitesse longitudinale V1 du premier véhicule 1 décroît, conformément à la formule (1).

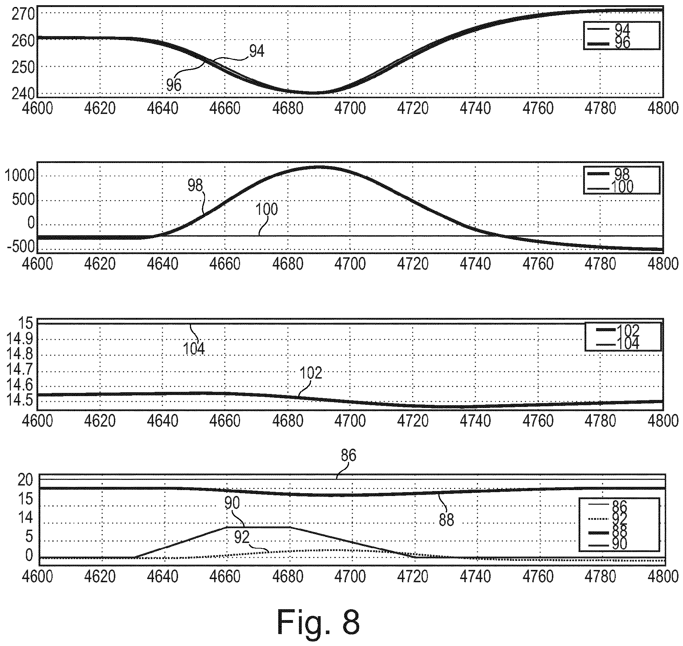

La figure 8 montre un aggrandissement des courbes 86 à 104 illustrées sur la figure 6, correspondant au cas où le second véhicule 10 roule dans une montée (pente de la route de valeur positive).

On remarque que, dans la montée, le système de commande 22 augmente le couple Tq1c développé par le premier véhicule 1 afin de compenser l'effort dû à la pente et de garder ainsi la force F1 exercée par l'organe de traction 12 à une valeur proche de sa consigne F1c

De la même manière, dans le cas d'une descente (pente de la route de valeur négative), le système de commande 22 diminue le couple Tq1c développé par le premier véhicule 1 jusqu'à ce que ce couple atteigne des valeurs négatives, autrement dit jusqu'au freinage du premier véhicule 1.

Ainsi, l'effort exercé par le premier véhicule tracté 1 sur le second véhicule tractant 10 est indépendant de la pente, contrairement au cas d'un véhicule tracté « passif ».

Bien entendu, il est possible d'apporter à l'invention de nombreuses modifications sans pour autant sortir du cadre de celle-ci.

## Revendications

1. Procédé de commande du couple développé par un moteur électrique (16) d'un premier véhicule (1), le premier véhicule (1) étant relié à un second véhicule (10) via un organe de traction (12), le premier véhicule (1) comprenant une batterie électrique (20) reliée au moteur électrique (16), le second véhicule (10) tractant le premier véhicule (1), le procédé comprenant une étape de mesure d'une force longitudinale F1 exercée par l'organe de traction (12) sur le premier véhicule (1), une étape de mesure de la vitesse longitudinale V1 du premier véhicule (1) et une étape de transmission au moteur électrique (16) d'une consigne de couple calculée Tq1c, **caractérisé en ce que** le procédé comprend en outre les étapes suivantes :

   • mesure de la puissance électrique instantanée Pe1 fournie par la batterie électrique (20) du premier véhicule (1) ; et
   • calcul de la consigne de couple Tq1c à développer par le moteur électrique (16), en fonction au moins de la force longitudinale mesurée F1m, de la vitesse longitudinale mesurée V1m et de la puissance électrique mesurée Pe1m, ledit calcul comprenant le calcul d'une valeur de consigne de force longitudinale F1c à partir de la valeur de la vitesse longitudinale mesurée V1m, de la valeur de puissance électrique mesurée Pe1m et d'une valeur de consigne de puissance électrique instantanée Pe1c, puis le calcul de la valeur de consigne de couple Tq1c à partir de la valeur de force longitudinale mesurée F1m et de la valeur de consigne de force longitudinale calculée F1c;

   transmission au moteur électrique de la consigne de couple calculée Tq1c.

2. Procédé de commande selon la revendication 1, **caractérisé en ce que** la force longitudinale F1 exercée par l'organe de traction (12) sur le premier véhicule (1) est régulée via la consigne de couple calculée Tq1c et une première boucle (43) d'asservissement à une valeur de consigne de force longitudinale F1c, **en ce que** la puissance électrique instantanée Pe1 fournie par la batterie électrique (20) du premier véhicule (1) est régulée via la consigne de couple calculée Tq1c et une deuxième boucle (58) d'asservissement à une valeur de consigne de puissance électrique instantanée Pe1c, la première boucle d'asservissement (43) étant imbriquée dans la deuxième boucle d'asservissement (58),.

**3.** Procédé de commande selon la revendication 1 ou 2, **caractérisé en ce qu'**il comprend en outre une étape de mesure du niveau de charge électrique Sol de la batterie électrique (20), **et en ce que** la consigne de couple Tq1c est calculée en outre en fonction du niveau de charge électrique mesuré Solm.

**4.** Procédé de commande selon la revendication 3 lorsqu'elle dépend de la revendication 2, **caractérisé en ce que** le niveau de charge électrique Sol de la batterie électrique (20) est régulé via la consigne de couple calculée Tq1c et une troisième boucle (78) d'asservissement à une valeur de consigne de niveau de charge électrique So1c, les première et deuxième boucles d'asservissement (43, 58) étant imbriquées dans la troisième boucle d'asservissement (78), **et en ce que** l'étape de calcul d'une consigne de couple Tq1c comprend en outre le calcul de la valeur de consigne de puissance électrique instantanée Pe1c à partir de la valeur du niveau de charge électrique mesuré Solm et de la valeur de consigne de niveau de charge électrique So1c.

**5.** Système (22) de commande du couple développé par un moteur électrique (16) d'un premier véhicule (1), le premier véhicule (1) étant relié à un second véhicule (10) via un organe de traction (12), le premier véhicule (1) comprenant une batterie électrique (20) reliée au moteur électrique (16), le système de commande (22) comprenant un contrôleur électronique (32) relié au moteur électrique (16), des moyens (26) de mesure d'une force longitudinale exercée par l'organe de traction (12) sur le premier véhicule (1) et des moyens (28) de mesure de la vitesse longitudinale du premier véhicule (1), le contrôleur électronique (32) étant propre à transmettre une consigne de couple calculée Tq1c au moteur électrique (16), chacun des moyens de mesure (26, 28) étant relié au contrôleur électronique (32), **caractérisé en ce que** le système de commande (22) comprend en outre des moyens (30) de mesure de la puissance électrique instantanée fournie par la batterie électrique (20) du premier véhicule (1), reliés au contrôleur électronique (32), **et en ce que** le contrôleur électronique (32) est propre à calculer la consigne de couple Tq1c à développer par le moteur électrique (16) du premier véhicule (1), en fonction au moins de la force longitudinale mesurée F1m, de la vitesse longitudinale mesurée V1m et de la puissance électrique mesurée Pe1m, le calcul de ladite consigne de couple comprenant le calcul d'une valeur de consigne de force longitudinale F1c à partir de la valeur de la vitesse longitudinale mesurée V1m, de la valeur de puissance électrique mesurée Pe1m et d'une valeur de consigne de puissance électrique instantanée Pe1c, puis le calcul de la valeur de consigne de couple Tq1c à partir de la valeur de force longitudinale mesurée F1m et de la valeur de consigne de force longitudinale calculée F1c, et à transmettre la consigne de couple calculée Tq1c au moteur électrique.

**6.** Système de commande (22) selon la revendication 5, **caractérisé en ce qu'**il comprend en outre des moyens (34) de mesure du niveau de charge électrique de la batterie électrique (20), reliés au contrôleur électronique (32), **et en ce que** le contrôleur électronique (32) comporte des premier, deuxième et troisième correcteurs (38, 40, 42), la sortie du premier correcteur (38) étant reliée au moteur électrique (16), le premier correcteur (38) étant apte à calculer la valeur de consigne de couple Tq1c à partir de la valeur de force longitudinale mesurée F1m et de la valeur de consigne de force longitudinale F1c ; le deuxième correcteur (40) étant connecté entre la sortie du troisième correcteur (42) et une entrée du premier correcteur (38), le deuxième correcteur (40) étant apte à calculer la valeur de consigne de force longitudinale F1c à partir de la valeur de la vitesse longitudinale mesurée V1m, de la valeur de puissance électrique mesurée Pe1m et d'une valeur de consigne de puissance électrique instantanée Pe1c, et le troisième correcteur (42) étant apte à calculer la valeur de consigne de puissance électrique instantanée Pe1c à partir de la valeur du niveau de charge électrique mesuré Solm et d'une valeur de consigne de niveau de charge électrique So1c.

**7.** Système de commande (22) selon la revendication 6, **caractérisé en ce que** le premier correcteur (38) est un régulateur proportionnel - intégral, **en ce que** le deuxième correcteur (40) est un régulateur proportionnel - intégral, **et en ce que** le troisième correcteur (42) est un régulateur proportionnel.

**8.** Système de commande (22) selon la revendication 7, **caractérisé en ce que** le gain du premier correcteur (38) est apte à prendre une première valeur prédéterminée G1 lorsque la valeur de force longitudinale mesurée F1m est de signe négatif, et une seconde valeur prédéterminée G2 lorsque la valeur de force longitudinale mesurée F1m est de signe positif, la première valeur G1 étant supérieure à la seconde valeur G2.

**9.** Système de commande (22) selon la revendication 7 ou 8, **caractérisé en ce que** le gain du deuxième correcteur (40) est apte à prendre une valeur prédéterminée non nulle G3 lorsque la valeur de la vitesse longitudinale mesurée V1m est supérieure à une valeur seuil prédéterminée V1s, et à prendre une valeur nulle lorsque la valeur de la vitesse longitudinale mesurée V1m est inférieure à la valeur seuil prédéterminée V1s.

10. Système de commande (22) selon l'une des revendications 6 à 9, **caractérisé en ce que** le premier correcteur (38) présente une première bande passante, le deuxième correcteur (40) présente une deuxième bande passante et le troisième correcteur (42) présente une troisième bande passante, la valeur de la deuxième bande passante étant inférieure à la valeur de la première bande passante, la valeur de la troisième bande passante étant inférieure à la valeur de la deuxième bande passante.

11. Véhicule (1) comprenant un moteur électrique (16) et une batterie électrique (20) reliée au moteur électrique (16), ledit véhicule (1) étant propre à être relié à un autre véhicule (10) via un organe de traction (12), **caractérisé en ce qu'**il comprend un système (22) de commande du couple développé par le moteur électrique (16) selon l'une des revendications 5 à 10, les moyens (26) de mesure d'une force longitudinale exercée par l'organe de traction (12) sur ledit véhicule (1) étant agencés au sein du véhicule (1)

**Patentansprüche**

1. Verfahren zur Steuerung des von einem Elektromotor (16) eines ersten Fahrzeugs (1) entwickelten Drehmoments, wobei das erste Fahrzeug (1) über ein Zugorgan (12) mit einem zweiten Fahrzeug (10) verbunden ist, wobei das erste Fahrzeug (1) eine mit dem Elektromotor (16) verbundene elektrische Batterie (20) enthält, wobei das zweite Fahrzeug (10) das erste Fahrzeug (1) zieht, wobei das Verfahren einen Schritt der Messung einer vom Zugorgan (12) auf das erste Fahrzeug (1) ausgeübten Längskraft F1, einen Schritt der Messung der Längsgeschwindigkeit V1 des ersten Fahrzeugs (1) und einen Schritt der Übertragung eines berechneten Drehmoment-Sollwerts Tq1c an den Elektromotor (16) enthält, **dadurch gekennzeichnet, dass** das Verfahren außerdem die folgenden Schritte enthält:

   • Messung der von der elektrischen Batterie (20) des ersten Fahrzeugs (1) gelieferten augenblicklichen elektrischen Leistung Pe1; und
   • Berechnung des vom Elektromotor (16) zu entwickelnden Drehmoment-Sollwerts Tq1c abhängig mindestens von der gemessenen Längskraft F1m, der gemessenen Längsgeschwindigkeit V1m und der gemessenen elektrischen Leistung Pe1m, wobei die Berechnung die Berechnung eines Längskraft-Sollwerts F1c ausgehend vom Wert der gemessenen Längsgeschwindigkeit V1m, vom Wert der gemessenen elektrischen Leistung Pe1m und von einem augenblicklichen elektrischen Leistungs-Sollwert Pe1c, dann die Berechnung des Drehmoment-Sollwerts Tq1c ausgehend vom Wert der gemessenen Längskraft F1m und vom berechneten Längskraft-Sollwert F1c enthält;
   • Übertragung des berechneten Drehmoment-Sollwerts Tq1c an den Elektromotor.

2. Steuerverfahren nach Anspruch 1, **dadurch gekennzeichnet, dass** die vom Zugorgan (12) auf das erste Fahrzeug (1) ausgeübte Längskraft F1 über den berechneten Drehmoment-Sollwert Tq1c und einen ersten Regelkreis (43) auf einen Längskraft-Sollwert F1c geregelt wird, dass die von der elektrischen Batterie (20) des ersten Fahrzeugs (1) gelieferte augenblickliche elektrische Leistung Pe1 über den berechneten Drehmoment-Sollwert Tq1c und einen zweiten Regelkreis (58) auf einen augenblicklichen elektrischen Leistungs-Sollwert Pe1c geregelt wird, wobei der erste Regelkreis (43) in den zweiten Regelkreis (58) eingebettet ist.

3. Steuerverfahren nach Anspruch 1 oder 2, **dadurch gekennzeichnet, dass** es außerdem einen Schritt der Messung des elektrischen Ladepegels Sol der elektrischen Batterie (20) enthält, und dass der Drehmoment-Sollwert Tq1c außerdem abhängig vom gemessenen elektrischen Ladepegel Solm berechnet wird.

4. Steuerverfahren nach Anspruch 3, wenn er von Anspruch 2 abhängt, **dadurch gekennzeichnet, dass** der elektrische Ladepegel Sol der elektrischen Batterie (20) über den berechneten Drehmoment-Sollwert Tq1c und einen dritten Regelkreis (78) auf einen elektrischen Ladepegel-Sollwert So1c geregelt wird, wobei die ersten und zweiten Regelkreise (43, 58) in den dritten Regelkreis (78) eingebettet sind, und dass der Schritt der Berechnung eines Drehmoment-Sollwerts Tq1c außerdem die Berechnung des augenblicklichen elektrischen Leistungs-Sollwerts Pe1c ausgehend vom Wert des gemessenen elektrischen Ladepegels Solm und vom elektrischen Ladepegel-Sollwert So1c enthält.

5. Steuersystem (22) des von einem Elektromotor (16) eines ersten Fahrzeugs (1) entwickelten Drehmoments, wobei das erste Fahrzeug (1) über ein Zugorgan (12) mit einem zweiten Fahrzeug (10) verbunden ist, wobei das erste Fahrzeug (1) eine mit dem Elektromotor (16) verbundene elektrische Batterie (20) enthält, wobei das Steuersystem (22) eine mit dem Elektromotor (16) verbundene elektronische Steuereinheit (32), Messeinrichtungen (26) einer vom Zugorgan (12) auf das erste Fahrzeug (1) ausgeübten Längskraft und Messeinrichtungen (28) der Längsgeschwindigkeit des ersten Fahrzeugs (1) enthält, wobei die elektronische Steuereinheit (32) geeignet ist, einen berechneten Drehmoment-Sollwert Tq1c an den Elektromotor (16) zu übertragen, wobei jede der Messeinrichtungen (26, 28) mit der elektronischen Steuereinheit (32) verbunden ist, **dadurch gekennzeichnet, dass** das Steuersystem (22) außerdem Messeinrichtungen (30) der von der elektrischen Batterie (20) des ersten Fahrzeugs (1) gelieferten augenblicklichen elektrischen Leistung enthält, die mit der elektronischen Steuereinheit (32) verbunden sind, und dass die elektronische Steuereinheit (32) geeignet ist, den vom Elektromotor (16) des ersten Fahrzeugs (1) zu entwickelnden Drehmoment-Sollwert Tq1c abhängig mindestens von der gemessenen Längskraft F1m, der gemessenen Längsgeschwindigkeit V1m und der gemessenen elektrischen Leistung Pe1m zu berechnen, wobei die Berechnung des Drehmoment-Sollwerts die Berechnung eines Längskraft-Sollwerts F1c ausgehend vom Wert der gemessenen Längsgeschwindigkeit V1m, dem Wert der gemessenen elektrischen Leistung Pe1m und einem augenblicklichen elektrischen Leistungs-Sollwert Pe1c, dann die Berechnung des Drehmoment-Sollwerts Tq1c ausgehend vom gemessenen Längskraftwert F1m und vom berechneten Längskraft-Sollwert F1c enthält, und den berechneten Drehmoment-Sollwert Tq1c an den Elektromotor zu übertragen.

6. Steuersystem (22) nach Anspruch 5, **dadurch gekennzeichnet, dass** es außerdem Messeinrichtungen (34) des elektrischen Ladepegels der elektrischen Batterie (20) enthält, die mit der elektronischen Steuereinheit (32) verbunden sind, und dass die elektronische Steuereinheit (32) erste, zweite und dritte Korrekturglieder (38, 40, 42) aufweist, wobei der Ausgang des ersten Korrekturglieds (38) mit dem Elektromotor (16) verbunden ist, wobei das erste Korrekturglied (38) fähig ist, den Drehmoment-Sollwert Tq1c ausgehend vom gemessenen Längskraftwert F1m und vom Längskraft-Sollwert F1c zu berechnen; wobei das zweite Korrekturglied (40) zwischen dem Ausgang des dritten Korrekturglieds (42) und einem Eingang des ersten Korrekturglieds (38) verbunden ist, wobei das zweite Korrekturglied (40) fähig ist, den Längskraft-Sollwert F1c ausgehend vom Wert der gemessenen Längsgeschwindigkeit V1m, dem gemessenen elektrischen Leistungswert Pe1m und einem augenblicklichen elektrischen Leistungs-Sollwert Pe1c zu berechnen, und das dritte Korrekturglied (42) fähig ist, den augenblicklichen elektrischen Leistungs-Sollwert Pe1c ausgehend vom Wert des gemessenen elektrischen Ladepegels Solm und einem elektrischen Ladepegel-Sollwert So1c zu berechnen.

7. Steuersystem (22) nach Anspruch 6, **dadurch gekennzeichnet, dass** das erste Korrekturglied (38) ein Proportional-Integral-Regler ist, dass das zweite Korrekturglied (40) ein Proportional-Integral-Regler ist, und dass das dritte Korrekturglied (42) ein Proportional-Regler ist.

8. Steuersystem (22) nach Anspruch 7, **dadurch gekennzeichnet, dass** die Verstärkung des ersten Korrekturglieds (38) fähig ist, einen ersten vorbestimmten Wert G1 anzunehmen, wenn der gemessene Längskraftwert F1m ein negatives Vorzeichen hat, und einen zweiten vorbestimmten Wert G2 anzunehmen, wenn der gemessene Längskraftwert F1m ein positives Vorzeichen hat, wobei der erste Wert G1 höher ist als der zweite Wert G2.

9. Steuersystem (22) nach Anspruch 7 oder 8, **dadurch gekennzeichnet, dass** die Verstärkung des zweiten Korrekturglieds (40) fähig ist, einen vorbestimmten Wert ungleich Null G3 anzunehmen, wenn der Wert der gemessenen Längsgeschwindigkeit V1m höher ist als ein vorbestimmter Schwellwert V1s, und einen Wert Null anzunehmen, wenn der Wert der gemessenen Längsgeschwindigkeit V1m niedriger ist als der vorbestimmte Schwellwert V1s.

10. Steuersystem (22) nach einem der Ansprüche 6 bis 9, **dadurch gekennzeichnet, dass** das erste Korrekturglied (38) eine erste Bandbreite aufweist, das zweite Korrekturglied (40) eine zweite Bandbreite aufweist und das dritte Korrekturglied (42) eine dritte Bandbreite aufweist, wobei der Wert der zweiten Bandbreite niedriger ist als der Wert der ersten Bandbreite, wobei der Wert der dritten Bandbreite niedriger ist als der Wert der zweiten Bandbreite.

11. Fahrzeug (1), das einen Elektromotor (16) und eine mit dem Elektromotor (16) verbundene elektrische Batterie (20) enthält, wobei das Fahrzeug (1) geeignet ist, über ein Zugorgan (12) mit einem anderen Fahrzeug (10) verbunden zu werden, **dadurch gekennzeichnet, dass** es ein Steuersystem (22) des vom Elektromotor (16) entwickelten Drehmoments nach einem der Ansprüche 5 bis 10 enthält, wobei die Messeinrichtungen (26) einer vom Zugorgan (12) auf das Fahrzeug (1) ausgeübten Längskraft innerhalb des Fahrzeugs (1) angeordnet sind.

**Claims**

1. System for controlling the torque developed by an electric motor (16) of a first vehicle (1), the first vehicle (1) being linked to a second vehicle (10) via a traction member (12), the first vehicle (1) comprising an electric battery (20) linked to the electric motor (16), the second vehicle (10) pulling the first vehicle (1), the method comprising a step of measurement of a longitudinal force F1 exerted by the traction member (12) on the first vehicle (1), a step of measurement of the longitudinal speed V1 of the first vehicle (1) and a step of transmission to the electric motor (16) of a calculated torque setpoint Tq1c, **characterized in that** the method further comprises the following steps:

  • measurement of the instantaneous electrical power Pe1 supplied by the electric battery (20) of the first vehicle (1);
  • calculation of the torque setpoint Tq1c to be developed by the electric motor (16), as a function at least of the measured longitudinal force F1m, of the measured longitudinal speed V1m and of the measured electrical power Pe1m, said calculation comprising the calculation of a longitudinal force setpoint value F1c from the measured longitudinal speed value V1m, from the measured electrical power value Pe1m and from an instantaneous electrical power setpoint value Pe1c, then the calculation of the torque setpoint value Tq1c from the measured longitudinal force value F1m and from the calculated longitudinal force setpoint value F1c; and
  • transmission to the electric motor of the calculated torque setpoint Tq1c.

2. Control method according to Claim 1, **characterized in that** the longitudinal force F1 exerted by the traction member (12) on the first vehicle (1) is regulated via the calculated torque setpoint Tq1c and a first servocontrol loop (43) to a longitudinal force setpoint value F1c, and **in that** the instantaneous electrical power Pe1 supplied by the electric battery (20) of the first vehicle (1) is regulated via the calculated torque setpoint Tq1c and a second servocontrol loop (58) to an instantaneous electrical power setpoint value Pe1c, the first servocontrol loop (43) being nested in the second servocontrol loop (58).

3. Control method according to Claim 1 or 2, **characterized in that** it further comprises a step of measurement of the level of electrical charge So1 of the electric battery (20), and **in that** the torque setpoint Tq1c is further calculated as a function of the measured level of electrical charge Solm.

4. Control method according to Claim 3 when it depends on Claim 2, **characterized in that** the level of electrical charge So1 of the electric battery (20) is regulated via the calculated torque setpoint Tq1c and a third servocontrol loop (78) to a level of electrical charge setpoint value So1c, the first and second servocontrol loops (43, 58) being nested in the third servocontrol loop (78), and **in that** the step of calculation of a torque setpoint Tq1c further comprises the calculation of the instantaneous electrical power setpoint value Pe1c from the measured level of electrical charge value Solm and from the level of electrical charge setpoint value So1c.

5. System (22) for controlling the torque developed by an electric motor (16) of a first vehicle (1), the first vehicle (1) being linked to a second vehicle (10) via a traction member (12), the first vehicle (1) comprising an electric battery (20) linked to the electric motor (16), the control system (22) comprising an electronic controller (32) linked to the electric motor (16), means (26) for measuring a longitudinal force exerted by the traction member (12) on the first vehicle (1) and means (28) for measuring the longitudinal speed of the first vehicle (1), the electronic controller (32) being designed to transmit a calculated torque setpoint Tq1c to the electric motor (16), each of the measurement means (26, 28) being linked to the electronic controller (32), **characterized in that** the control means (22) further comprises means (30) for measuring the instantaneous electrical power supplied by the electric battery (20) of the first vehicle (1), linked to the electronic controller (32), and **in that** the electronic controller (32) is designed to calculate the torque setpoint Tq1c to be developed by the electric motor (16) of the first vehicle (1), as a function at least of the measured longitudinal force F1m, of the measured longitudinal speed V1m and of the measured electrical power Pe1m, the calculation of said torque setpoint comprising the calculation of a longitudinal force setpoint value F1c from the measured longitudinal speed value V1m, from the measured electrical power value Pe1m and from an instantaneous electrical power setpoint value Pe1c, then the calculation of the torque setpoint value Tq1c from the measured longitudinal force value F1m and from the calculated longitudinal force setpoint value F1c, and to transmit the calculated torque setpoint Tq1c to the electric motor.

6. Control system (22) according to Claim 5, **characterized in that** it further comprises means (34) for measuring the level of electrical charge of the electric battery (20), linked to the electronic controller (32), and **in that** the electronic controller (32) comprises first, second and third correctors (38, 40, 42), the output of the first corrector (38) being linked to the electric motor (16), the first corrector (38) being able to calculate the torque setpoint value Tq1c from the measured longitudinal force value F1m and from the longitudinal force setpoint value F1c, the second corrector (40) being connected between the output of the third corrector (42) and an input of the first corrector (38), the second corrector (40) being able to calculate the longitudinal force setpoint value F1c from the measured longitudinal speed value V1m, from the measured electrical power value Pe1m and from an instantaneous electrical power setpoint value Pe1c, and the third corrector (42) being able to calculate the instantaneous electrical power setpoint value Pe1c from the measured level of electrical charge value Solm and from a level of electrical charge setpoint value So1c.

7. Control system (22) according to Claim 6, **characterized in that** the first corrector (38) is a proportional-integral regulator, **in that** the second corrector (40) is a proportional-integral regulator, and **in that** the third corrector (42) is a proportional regulator.

8. Control system (22) according to Claim 7, **characterized in that** the gain of the first corrector (38) is able to take a first predetermined value G1 when the measured longitudinal force value F1m is of negative sign, and a second predetermined value G2 when the measured longitudinal force value F1m is of positive sign, the first value G1 being greater than the second value G2.

9. Control system (22) according to Claim 7 or 8, **characterized in that** the gain of the second corrector (40) is able to take a non-zero predetermined value G3 when the measured longitudinal speed value V1m is greater than a predetermined threshold value V1s, and to take a zero value when the measured longitudinal speed value V1m is less than the predetermined threshold value V1s.

10. Control system (22) according to one of Claims 6 to 9, **characterized in that** the first corrector (38) has a first pass band, the second corrector (40) has a second pass band and the third corrector (42) has a third pass band, the value of the second pass band being less than the value of the first pass band, the value of the third pass band being less than the value of the second pass band.

11. Vehicle (1) comprising an electric motor (16) and an electric battery (20) linked to the electric motor (16), said vehicle (1) being designed to be linked to another vehicle (10) via a traction member (12), **characterized in that** it comprises a system (22) for controlling the torque developed by the electric motor (16) according to one of Claims 5 to 10, the means (26) for measuring a longitudinal force exerted by the traction member (12) on said vehicle (1) being arranged within the vehicle (1).

Fig. 1

Fig. 2

Fig. 3

Fig. 4

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130311058 A1
- JP 2003299205 A